# DEMANDE DE BREVET EUROPEEN

(11) **EP 1 384 630 A1**
(43) Date de publication de la demande: **28.01.2004**
(21) Numéro de dépôt: 03291866.6
(22) Date de dépôt: 28.07.2003
(51) Int. Cl.: B60R 19/26, B60R 19/12, B60R 19/42

(54) **Pièce de protection, notamment pour véhicule automobile**

(30) Priorité: 26.07.2002 FR 0209576
(71) Demandeur: COMPAGNIE PLASTIC OMNIUM, 69007 Lyon (FR)
(72) Inventeur: Cornet, Olivier, 01250 Ceyzeriat (FR); Ader, Stéphanie, 01500 Ambronay (FR); Trocherie, François, 01800 Meximieux (FR); Malteste, Stéphane, 01800 Meximieux (FR)
(74) Mandataire: Remy, Vincent Noel Paul

(57) **Abrégé**

L'invention concerne une pièce de protection d'une pièce de carrosserie latérale (42). Elle possède une paroi apte à recouvrir au moins partiellement la pièce de carrosserie latérale et un retour destiné à s'étendre en direction de la pièce de carrosserie latérale, agencé de manière à pouvoir s'escamoter pour permettre à la paroi de ladite pièce de protection de se rapprocher de la pièce de carrosserie latérale, de sorte qu'en cas de contact avec un impacteur et pour des efforts inférieurs à un seuil prédéterminé, seule la pièce de protection se déforme en préservant la pièce de carrosserie latérale.

L'invention concerne également un ensemble de carrosserie et une pièce de carrosserie.

## Description

La présente invention concerne une pièce de protection, notamment pour véhicule automobile, un ensemble de carrosserie et une pièce de carrosserie.

On connaît les pièces de carrosserie en matière thermoplastique qui présentent, parmi de nombreux avantages, celui de supporter de légères déformations sans se briser et de reprendre leur forme initiale par élasticité.

De telles pièces de carrosserie ne peuvent cependant pas être toujours utilisées car une certaine rigidité est parfois préférée pour certaines parties d'un véhicule.

C'est pourquoi on continue d'utiliser des pièces de carrosserie en tôle, notamment pour des portières, des ailes arrière ou des ailes avant. La tôle est quelquefois remplacée par une structure en une matière thermodurcissable telle que le SMC (sheet molding compound) qui est en polyester.

Un inconvénient des pièces de carrosserie rigides est qu'elles peuvent être endommagées à l'occasion de petits chocs qui n'ont de conséquences ni sur la structure du véhicule, ni sur la sécurité des passagers mais qui engendrent des frais de réparation justifiés uniquement par des préoccupations esthétiques. C'est en particulier le cas des pièces de carrosserie latérales qui sont très exposées aux petits chocs, notamment contre des obstacles bas comme des bordures de trottoirs ou des plots.

L'invention a pour but de remédier à ces inconvénients en fournissant une pièce de protection capable d'éliminer ce besoin de réparation.

A cet effet, l'invention a pour objet une pièce de protection d'une pièce de carrosserie latérale, caractérisée en ce qu'elle possède une paroi apte à recouvrir au moins partiellement la pièce de carrosserie latérale et un retour destiné à s'étendre en direction de la pièce de carrosserie latérale, agencé de manière à pouvoir s'escamoter pour permettre à la paroi de ladite pièce de protection de se rapprocher de la pièce de carrosserie latérale, de sorte qu'en cas de contact avec un impacteur et pour des efforts inférieurs à un seuil prédéterminé, seule la pièce de protection se déforme en préservant la pièce de carrosserie latérale.

Ainsi, grâce à l'invention, l'escamotage du retour de la pièce de protection permet à cette dernière de se déformer sous l'action de l'impacteur sans transmettre à la pièce de carrosserie latérale de contraintes susceptibles de l'endommager.

La pièce de carrosserie latérale peut donc supporter de petits chocs latéraux sans qu'il soit nécessaire de procéder à de coûteuses réparations.

Une pièce de protection d'une pièce de carrosserie latérale selon l'invention peut en outre comporter l'une ou plusieurs des caractéristiques suivantes ;
- le retour est agencé pour s'escamoter par flambage ;
- le retour est agencé pour s'escamoter en se pliant ;
- le retour est agencé de manière à s'escamoter en s'avançant au-delà de la pièce de carrosserie latérale.

L'invention a également pour objet un ensemble de carrosserie de véhicule automobile comprenant une pièce de carrosserie latérale et une pièce de protection telles que décrites ci-dessus.

Un ensemble de carrosserie selon l'invention peut en outre comporter l'une ou plusieurs des caractéristiques suivantes ;
- une pièce support est prévue pour la pièce de protection ;
- la pièce de carrosserie latérale est une aile ou un panneau extérieur de portière ;
- l'ensemble comporte en outre des moyens de liaison pour réunir le retour de la pièce de protection à la pièce de carrosserie latérale;
- les moyens de liaison sont fusibles ;
- les moyens de liaison fusibles sont constitués par des rivets en matière plastique ;
- les moyens de liaison fusibles sont constitués par des points de soudure ;
- la pièce de carrosserie latérale présente un renfoncement en regard de la pièce de protection ;
- la pièce de protection occupe le renfoncement et apparaît dans le prolongement de la pièce de carrosserie latérale.

L'invention a également pour objet une pièce de carrosserie latéral d'un véhicule automobile, caractérisée en qu'elle présente un renfoncement dirigé vers l'extérieur du véhicule, pour recevoir une pièce de protection telle que décrite ci-dessus.

L'invention sera mieux comprise à la lecture de la description qui va suivre, donnée uniquement à titre d'exemples et faite en se référant aux dessins annexés dans lesquels ;
- la figure 1 est une vue en élévation de l'avant d'un véhicule, selon un premier mode de réalisation ;
- la figure 2 est une vue en coupe selon ll-ll de la figure 1 ;
- la figure 3 est une vue en perspective et en coupe d'une portière de véhicule automobile, selon un deuxième mode de réalisation ;
- la figure 4 est une vue en coupe selon IV-IV de la figure 3, selon une première variante ;
- la figure 5 est une vue analogue à la figure 4 après contact avec un impacteur ;
- la figure 6 est une vue analogue à la figure 4, selon une seconde variante de ce deuxième mode de réalisation ;
- la figure 7 est une section de la partie inférieure d'une pièce de carrosserie latérale selon un troisième mode de réalisation ;
- la figure 8 est une vue analogue à la figure 7 après contact avec un impacteur, selon une première variante ;
- la figure 9 est une vue analogue à la figure 8 montrant une seconde variante de ce troisième mode de réalisation.

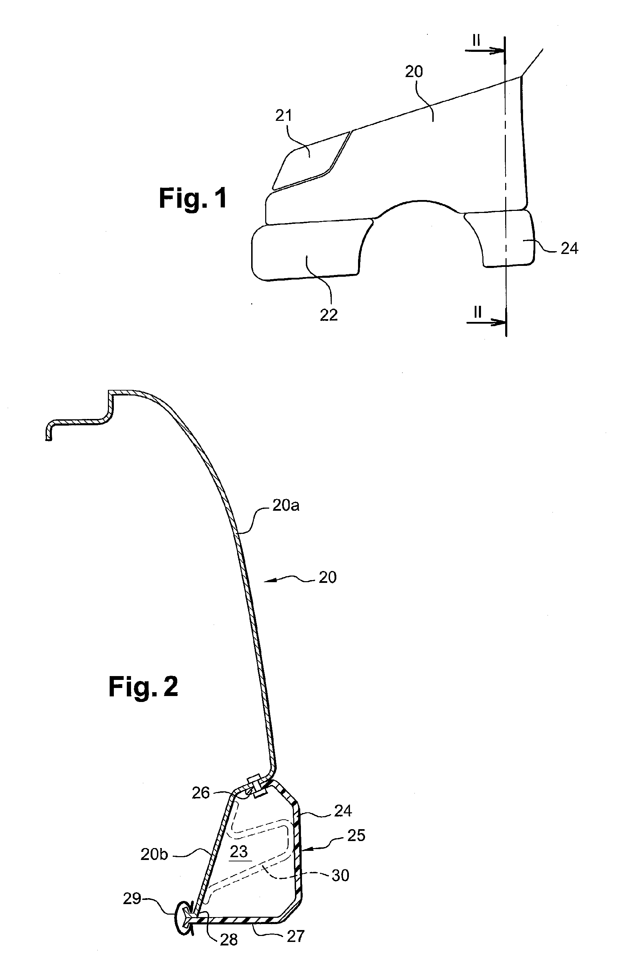

Le premier mode de réalisation illustré par les figures 1 et 2 concerne une aile avant 20 d'un véhicule automobile dont on a représenté, sur la figure 1, un optique 21 et un bouclier de pare-chocs 22.

Sur la coupe de la figure 2, on voit que l'aile 20 comporte une partie visible supérieure 20a et une partie invisible inférieure 20b qui délimite un renfoncement vers l'intérieur du véhicule.

Ce renfoncement crée un logement 23 dans lequel on vient fixer un bandeau protecteur 24 constituant une pièce de protection selon l'invention.

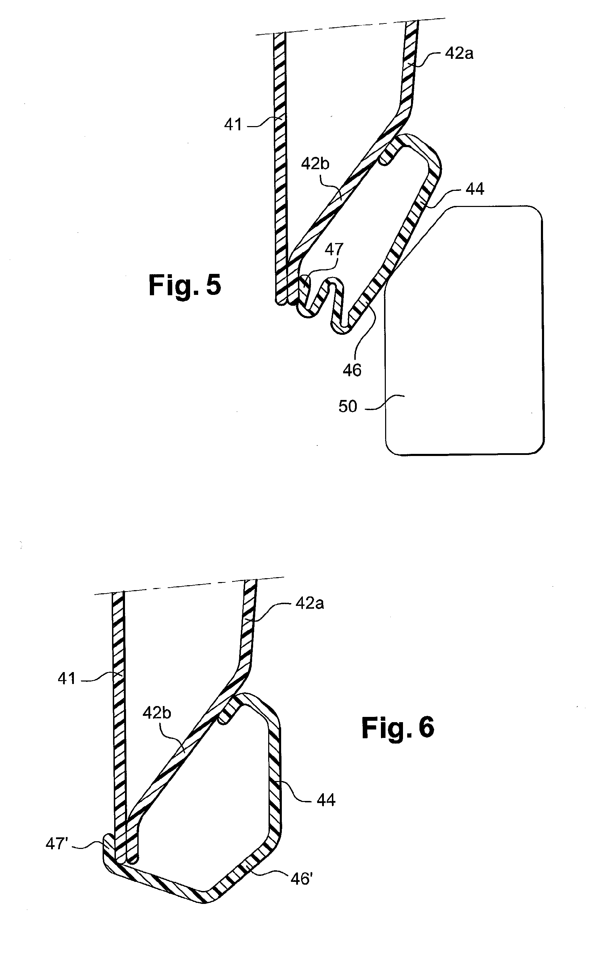

Comme on le voit sur la figure 6, le bandeau protecteur 24 comporte une paroi externe visible 25, un rebord supérieur 26 qui est fixé par rivet à l'aile 20 et un retour inférieur 27 dont l'extrémité libre est solidarisée au bord inférieur 28 de l'aile grâce à une agrafe 29.

Conformément à l'invention, le bandeau 24 joue le rôle de pièce de protection pour la pièce de carrosserie latérale constituée par l'aile 20.

En cas d'impact avec un impacteur venant enfoncer le bandeau 24 (de la droite vers la gauche sur la figure 6), le retour 27 peut s'escamoter en détachant l'agrafe 27 et en s'avançant au-delà du bord 28 de l'aile, vers l'intérieur du véhicule.

Le rebord supérieur 26 du bandeau 24 demeure fixé à l'aile grâce au rivet et la flexion du bandeau permet à la paroi 25 de se rapprocher de la partie cachée 20b de l'aile.

Si le bandeau 24 demeure dans sa zone élastique, il reprend ensuite sa forme initiale par élasticité et la réparation se borne à un repositionnement de l'agrafe 29 pour solidariser l'extrémité libre du retour 27 au bord inférieur 28 de l'aile.

Si, au pire, le bandeau 24 se brise, il suffit de le remplacer.

En toute hypothèse, l'aile 20 est épargnée et peut être conservée.

On peut d'ailleurs noter que même en cas de légère déformation de l'aile, un bandeau neuf remplaçant le bandeau détérioré peut masquer les dégradations visuelles de l'aile, de sorte que, sous réserve que les autres fonctions de l'aile soient maintenues, on peut conserver une aile déformée dans sa partie cachée 20b et limiter ainsi les frais de réparation au seul remplacement du bandeau.

Sur la figure 2, on a également représenté en traits interrompus une pièce support 30 qui vise à améliorer la rigidité du bandeau 24, notamment dans sa partie supérieure, afin de limiter l'effet de cloquage. Ainsi, un utilisateur du véhicule qui exerce une pression sur le bandeau ne risque pas de l'enfoncer trop facilement.

La pièce support 30 est dimensionnée de manière à ne pas nuire au fonctionnement du bandeau 24 tel que décrit précédemment.

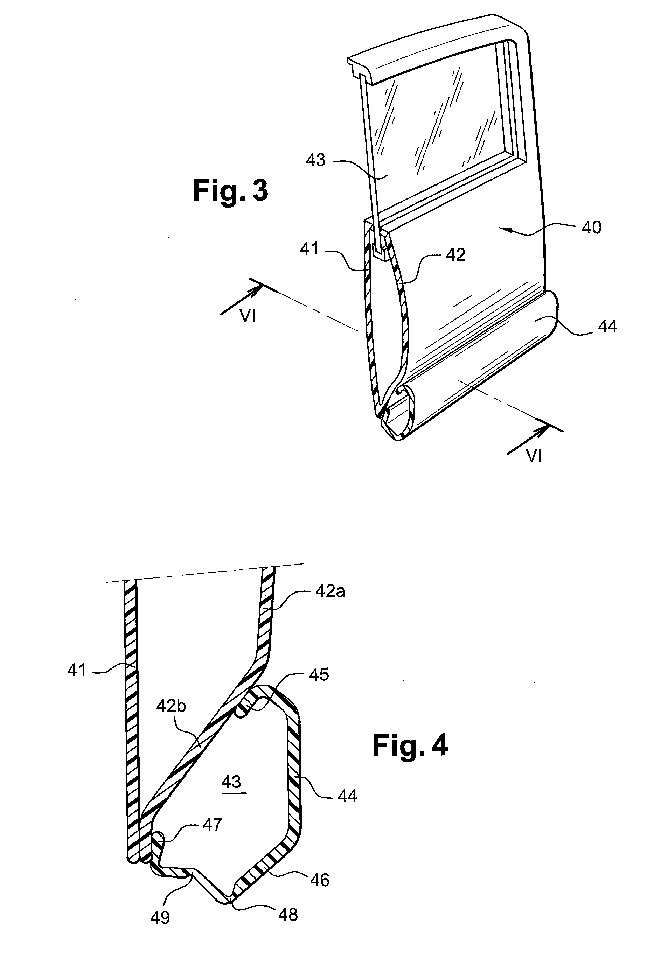

Dans le deuxième mode de réalisation, illustré par les figures 3 à 6, une portière 40 comporte un cadre structurel, qui a été volontairement simplifié sous la forme d'une paroi intérieure 41 et une paroi extérieure 42, et une vitre 43.

Comme on le voit mieux sur les figures 4 à 6, la paroi 42 constitue une pièce de carrosserie latérale ayant une partie supérieure visible 42a et une partie inférieure cachée 42b, laquelle délimite un logement 43 recevant un bandeau de protection 44.

Ce bandeau 44 comporte un retour supérieur 45 qui est fixé par des moyens de fixation (non représentés) à la paroi externe 42 de la portière et un retour inférieur 46 terminé par un rebord 47.

Dans la première variante correspondant aux figures 4 et 5, le rebord 47 est solidarisé par des moyens de fixation (non représentés) à l'extrémité inférieure de la paroi 42 et le retour 46 comporte deux réductions de section 48, 49 qui forment des zones de pliage fragilisées.

De cette manière comme on le voit sur la figure 4, lorsqu'un impacteur 50 vient appuyer contre le bandeau 44, le retour 46 s'escamote en se pliant, ce qui permet à la paroi externe du bandeau de se rapprocher de la paroi 42 de la portière.

Dans la variante de la figure 6, le rebord 47' n'est pas fixé à l'extrémité inférieure de la portière. Il est simplement plaqué contre le bord inférieur de la paroi intérieure 41 de la portière par la seule élasticité du bandeau 44.

De ce fait, en cas d'appui exercé par un impacteur, le bandeau se déforme et le retour 46' s'escamote en passant sous les extrémités inférieures des parois 41, 42 de la portière, en direction de l'intérieur du véhicule.

En cas de déformation purement élastique, le bandeau 44 reprend ultérieurement sa position initiale et le retour 47' revient se plaquer contre la paroi 41 de la portière.

Si la déformation du bandeau est plus importante, il se brise et doit être remplacé.

Dans cette variante, d'éventuels frottements ou vibrations générés entre le rebord 47' et la paroi 41 peuvent être traités par interposition d'un joint approprié.

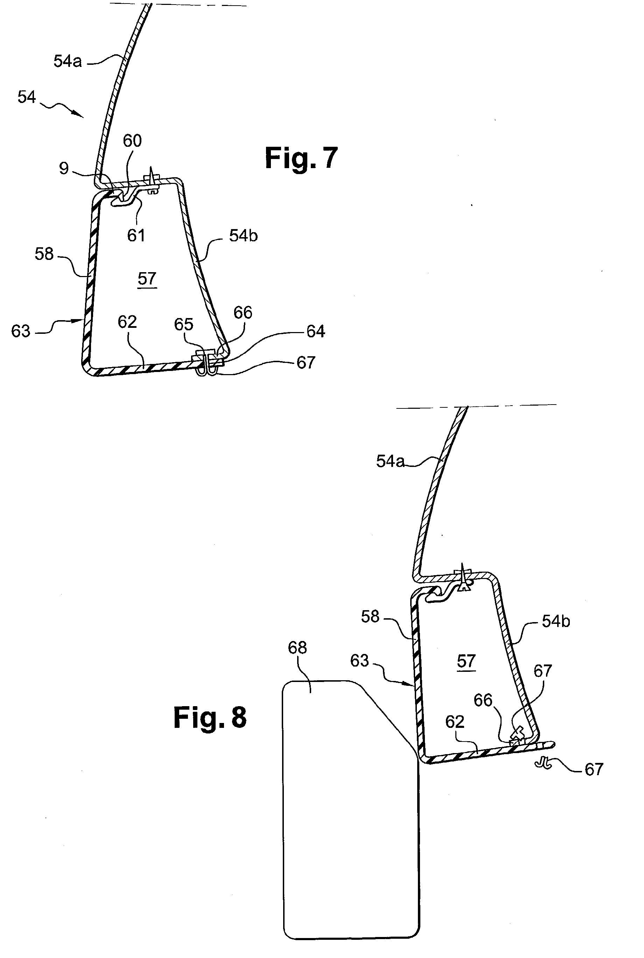

Dans le troisième mode de réalisation des figures 7 à 9, on a représenté une pièce de carrosserie latérale quelconque 54, munie d'un bandeau de protection 58 à sa partie inférieure. La pièce de carrosserie latérale 54 est métallique et comporte un logement 57 recevant le bandeau 58.

En section, ce bandeau 58 présente une forme générale en L avec un rebord supérieur 59, terminé par un bourrelet 60 qui permet son encliquetage dans une patte de retenue 61 vissée dans la pièce métallique 54. Inférieurement, le bandeau 58 comporte un retour 62 qui s'étend sensiblement perpendiculairement à sa paroi externe 63, en direction de l'intérieur du véhicule. A son extrémité libre, le retour 62 comporte un trou traversant 74 qui coïncide avec un trou traversant 65 formé dans un rebord 66 de la pièce métallique. Un rivet fusible 67, par exemple un rivet en matière plastique tel que celui commercialisé sous la dénomination courante "plastirivet", par exemple celui commercialisé par la société ITW, réunit la pièce métallique 64 au retour 62 à travers les deux trous traversant 64 et 65.

Dans la position au repos représentée sur la figure 7, la paroi 63 du bandeau se trouve dans le prolongement de la partie visible 54a de la pièce métallique.

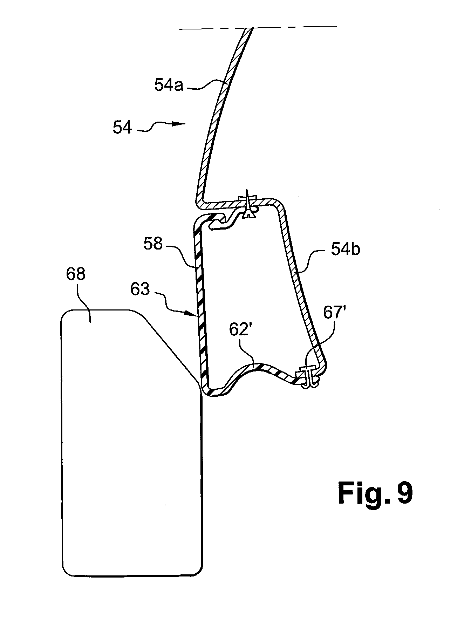

Les figures 8 et 9 montrent le comportement du bandeau 58 en cas de contact avec un impacteur 18.

Selon la première variante illustrée par la figure 8, l'impacteur 68 commence par arriver au contact du bandeau 58.

Sous la pression, le rivet 67 subit un cisaillement et s'autodétruit en libérant le retour 62 de la pièce métallique 54.

De ce fait, l'extrémité libre du retour 62 peut s'avancer au-delà de la pièce métallique 54, vers l'intérieur du véhicule et la paroi 63 peut s'enfoncer dans le logement 57 en suivant l'impacteur 68.

Le rivet 67 est taré de manière à céder sous le cisaillement résultant du déplacement du retour 62 vers l'intérieur du véhicule, avant que l'effort transmis à la pièce métallique 54 n'atteigne une valeur seuil susceptible de l'endommager.

Grâce à cette désolidarisation entre le bandeau et la pièce métallique, résultant du fait que le retour 62 s'escamote, la pièce métallique 54 ne subit aucune dégradation lors du contact avec l'impacteur.

Si le bandeau se déforme élastiquement, il reprend ensuite sa forme initiale et il suffit de remplacer le rivet 67 pour restaurer l'esthétique du véhicule.

Si les déplacements imposés par l'impacteur sont trop importants, le bandeau se brise mais la pièce métallique demeure intacte. Il suffit de remplacer le bandeau pour réparer le véhicule.

En toute hypothèse, les parties les plus coûteuses sont épargnées et seul le bandeau en matière thermoplastique qui est relativement bon marché doit être remplacé.

Dans la variante illustrée par la figure 9, le rivet 67' n'est pas fusible mais le retour 62' du bandeau 58 est apte à s'escamoter par flambage.

Comme précédemment, la paroi 63 du bandeau 58 peut ainsi reculer avec l'impacteur 68.

Dans cette variante, on dimensionne et l'on conforme le retour 62' du bandeau de manière que son flambage se produise pour des efforts inférieurs à une valeur seuil à partir de laquelle la pièce métallique 54 pourrait se détériorer.

Comme dans l'exemple de la figure 8, le bandeau peut reprendre son état initial si les déformations qu'il subit demeurent dans sa zone d'élasticité. Dans le cas contraire, on remplace le bandeau mais on épargne la pièce métallique 54.

## Revendications

1. Pièce de protection d'une pièce de carrosserie latérale (20 ; 42 ; 54),
**caractérisée en ce qu'**elle possède une paroi (13 ; 25 ; 44) apte à recouvrir au moins partiellement la pièce de carrosserie latérale et un retour (27 ; 46 ; 46' ; 62 ; 62') destiné à s'étendre en direction de la pièce de carrosserie latérale, agencé de manière à pouvoir s'escamoter pour permettre à la paroi de ladite pièce de protection de se rapprocher de la pièce de carrosserie latérale, de sorte qu'en cas de contact avec un impacteur (18 ; 50) et pour des efforts inférieurs à un seuil prédéterminé, seule la pièce de protection se déforme en préservant la pièce de carrosserie latérale.

2. Pièce selon la revendication 1, dans laquelle le retour (62') est agencé de manière à s'escamoter par flambage.

3. Pièce selon la revendication 1, dans laquelle le retour (46) est agencé de manière à s'escamoter en se pliant.

4. Pièce selon la revendication 1, dans laquelle le retour (62 ; 27 ; 46') est agencé de manière à s'escamoter en s'avançant au-delà de la pièce de carrosserie latérale.

5. Ensemble de carrosserie de véhicule automobile, comprenant une pièce de carrosserie latérale (20 ; 42 ; 54) et une pièce de protection (24 ; 44 ; 58) selon l'une quelconque des revendications 1 à 4.

6. Ensemble selon la revendication 5, comprenant une pièce support (30) pour la pièce de protection.

7. Ensemble selon l'une quelconque des revendications 5 et 6, dans lequel la pièce de carrosserie latérale est une aile (20).

8. Ensemble selon l'une quelconque des revendications 5 à 7, dans lequel la pièce de carrosserie latérale est un panneau extérieur de portière (42).

9. Ensemble selon l'une quelconque des revendications 5 à 8, comportant en outre des moyens de liaison (29 ; 67 ; 67') pour réunir le retour de la pièce de protection à la pièce de carrosserie latérale.

10. Ensemble selon la revendication 9, dans lequel les moyens de liaison (17) sont fusibles.

11. Ensemble selon la revendication 10, dans lequel les moyens de liaison fusibles sont constitués par des rivets (67) en matière plastique.

12. Ensemble selon la revendication 10, dans lequel les moyens de liaison fusibles sont constitués par des points de soudure.

13. Ensemble selon l'une quelconque des revendications 10 à 12, dans lequel la pièce de carrosserie latérale (20 ; 41 ; 54) présente un renfoncement (23 ; 43 ; 57) en regard de la pièce de protection.

14. Ensemble selon la revendication 13, dans lequel la pièce de protection (8) occupe le renfoncement (57) et apparaît, depuis l'extérieur du véhicule, dans le prolongement de la pièce de carrosserie latérale (54).

15. Pièce de carrosserie latérale (20 ; 41 ; 54) d'un véhicule automobile, **caractérisée en ce qu'**elle présente un renfoncement du côté extérieur du véhicule, pour recevoir une pièce de protection selon l'une quelconque des revendications 1 à 4.
